# EUROPEAN PATENT APPLICATION

(11) **EP 4 344 988 A1**
(43) Date of publication of application: **03.04.2024**
(21) Application number: 22198751.4
(22) Date of filing: 29.09.2022
(51) Int. Cl.: B62D 61/00, B62D 63/02, B62D 57/024

(54) **ROBOTIC VEHICLE**

(71) Applicant: Morra, Alessandro, 8057 Zürich (CH)
(72) Inventor: MANNHART, Dominik, 8708 Männedorf (CH); KLEMM, Victor, 8702 Zollikon (CH); SALZMANN, Ciro, 8003 Zürich (CH); MORRA, Alessandro, 8057 Zürich (CH); DE LA IGLESIA VALLS, Miguel, 8008 Zürich (CH)
(74) Representative: Frei Patent Attorneys

(57) **Abstract**

A robotic vehicle (1) comprises a body (2) and two wheeled legs (3) for locomotion. The two legs (3) are attached to opposing sides of the body (2). For each of the two legs, the leg (3) comprises a respective hip joint (31), an upper link (32), a knee joint (33), a lower link (34), a wheel joint (35), and a wheel (36).For at least one of the two legs (3), in particular for both, the relative angular position of the respective hip joint (31) has a range of at least 180°.

## Description

The invention relates to the field of mobile robots. It relates to a robotic vehicle as described in the preamble of the corresponding independent claim.

It is known to equip legged robots with wheels at the ends of their legs. If a two-legged wheeled robot falls over, in certain positions it needs additional actuators to stand up again. That is, it is unable to stand up using only its two wheeled legs.

It further is known to equip autonomous mobile robots with sensors and actuators for specific tasks. However, depending on the requirements on the sensors and actuators, and the kinematics of the mobile robots, a dedicated robot arm or a gimbal is required to position the sensors or actuators. This complicates the structure of the overall system.

It is therefore an object of the invention to create a robotic vehicle of the type mentioned initially, which overcomes the disadvantages mentioned above.

These objects are achieved by a robotic vehicle according to the claims.

The robotic vehicle comprises a body and two legs for locomotion, and a control unit for controlling movement of the two legs,
the two legs being attached to opposing sides of the body,
wherein for each of the two legs it is the case that
   - the leg comprises a respective hip joint, an upper link, a knee joint, a lower link, a wheel joint, and a wheel,
   - the upper link being attached to the body and being rotatable relative to the body by the hip joint, with a relative angular position of the hip joint being set by a hip drive,
   - the lower link being attached to the upper link and rotatable relative to the upper link by the knee joint,
   - with a relative angular position of the knee joint being set by a knee drive,
   - the wheel being attached to the lower link and rotatable relative to the lower link by the wheel joint,
   - with a relative angular position of the wheel joint being set by a wheel drive.

Therein, for at least one of the two legs, in particular for both, the relative angular position of the respective hip joint has a range of at least 180°.

This makes it possible for the vehicle to stand up from almost any position in which it may come to lie, without the use of further actuators such as an arm or a further leg.

In embodiments, the hip joints of both legs have a range of at least 180°. This makes it possible, by rotating both hip joints, while keeping the legs otherwise in essentially the same configuration, to flip the body from a reference position to an inverted position. That is, in the reference position, a first side of the body (upper side) is on top, facing upward, and an opposite second side (lower side) is on the bottom, facing downward. In the inverted position, the first side faces downward and the second face faces upward. Likewise, a front and back side exchange places when rotating the body around the hip joints by 180°. Actuators and sensors, and more in general, any functional elements arranged on the body can be placed in a desired angular position by rotating the body.

In embodiments, for at least one of the two legs, in particular for both, the relative angular position of the respective hip joint has a range of at least 350°.

This makes it possible for the vehicle to stand up and sit down efficiently, by using relatively gradual movements. In contrast, in prior art vehicles, it may be necessary to perform jerky movements of legs or wheels, making use of the inertia of the body, in order to achieve certain movements of the body.

In embodiments, for at least one of the two legs, in particular for both, the relative angular position of the respective hip joint has a range of at least 1080°, in particular wherein the relative angular position is not limited.

This makes it possible for the vehicle to stand up and sit-down efficiently, by using relatively small movements. In contrast, if in a prior art vehicle a rotation is limited, then if a rotation in a first direction is desired but runs into that limit, then it is necessary to perform almost a full rotation in the opposite direction.

In embodiments, for at least one of the two legs, in particular for both, the relative angular position of the respective knee joint has a range of at least 180°.

In embodiments, for at least one of the two legs, in particular for both, the relative angular position of the respective knee joint has a range of at least 350°, in particular least 1080°, in particular wherein the relative angular position is not limited.

In embodiments, one or more of a sensor for observing the vehicle's environment or an end effector are attached to the body and are moved with the body (In robotics, an end effector is the device at the end of a robotic arm or manipulator, designed to interact with the environment). This makes it possible to move the sensor or end effector, with six degrees of freedom, to position an active region of the sensor or end effector. For this, the freedom of movement of the body suffices, and no additional actuators, such as a manipulator arm, are required for positioning the sensor or end effector.

In embodiments, the robotic vehicle comprises a sensor for noncontact sensing, in particular one or more of a camera, a distance sensor, microphones, ground penetrating radars.

A camera can be configured for providing images in one or more of the visible range, ultraviolet range and infrared range. In embodiments, it provides depth (distance) information, in which case it can be considered a (3D) scanner. The kinematic structure and range of motion of the legs makes it possible to move the sensor, in particular a camera, with six degrees of freedom and with a large range of motion. The range of motion with regard to sensor pan (yaw) can be unlimited. The range of motion with regard to tilt (pitch) equals the range of motion of the hip joint and thus can be very large, or unlimited as well.

In embodiments, the sensor is a line sensor, capturing, for example, image or depth (distance) information along a line. This line can be swept in a direction orthogonal to the line, and thereby covers an area. Sweeping this line can be done by panning or tilting the sensor by moving the vehicle body.

In embodiments, the robotic vehicle comprises a sensor for contact sensing, in particular one or more of an ohm-metre, corrosion sensor, Ultrasonic Transducer, Electro Magnetic Acoustic Transducer, Dry Film Thickness gauge or the like.

So, the vehicle can be used as a freely moveable basis for a sensor, with the degrees of freedom and the range of motion of the sensor made possible by the range of motion of the vehicle's legs.

In embodiments, the robotic vehicle comprises an actuator, in particular one or more of a gripper, or a tool, such as an electromagnet, a drill, a brush, a grinder machine, a sanding machine or the like.

This makes it possible for the vehicle to be used as a freely moveable basis for the actuator or tool, with the degrees of freedom and the range of motion of the actuator made possible by the range of motion of the vehicle's legs.

In embodiments, the robotic vehicle comprises a cooperating unit that is configured to be carried by the vehicle, and a connecting element arranged to releasably connect the body to the cooperating unit by a mating operation, wherein the mating operation comprises moving the body relative to the cooperating unit.

This allows the robotic vehicle to couple or decouple such cooperating units, for example by picking them up from or depositing them on a docking station or simply from an essentially horizontal surface. The releasable connection can comprise passive locking elements that are actuated by the movement of the connecting element relative to the cooperating unit. Or it can comprise active locking elements that are actuated by a corresponding drive. Locking elements can be, for example, locking pins or hooks.

In embodiments, the cooperating unit is one of an actuator or a sensor.

In embodiments, the cooperating unit is a battery.

In embodiments, the cooperating unit is a payload or a unit configured to receive and carry a payload.

This makes it possible to have interchangeable or modular sensors and/or actuators and/or batteries and/or payloads that can be detached from or attached to the robotic vehicle as required for a particular situation or task.

In embodiments, the control unit is programmed to perform a connection operation to connect the body to the cooperating unit, wherein the connection operation comprises operating the legs to move the body to be located adjacent to, in particular above, the cooperating unit, and to perform a mating movement of the body towards and against the cooperating unit.

Further embodiments are evident from the dependent patent claims.

The subject matter of the invention will be explained in more detail in the following text with reference to exemplary embodiments which are illustrated in the attached drawings, which schematically show:
- Figure 1: a robotic vehicle;
- Figure 2: an exploded view of the robotic vehicle;
- Figure 3-4: sequences or motion for uprighting the vehicle;
- Figure 5-6: adaptability of the vehicle;
- Figure 7-10: movability of the vehicle's body and an attached sensor;
- Figure 11: a vehicle with an actuator;
- Figure 12: a vehicle with detachable elements.

In principle, identical or functionally identical parts are provided with the same reference symbols in the figures.

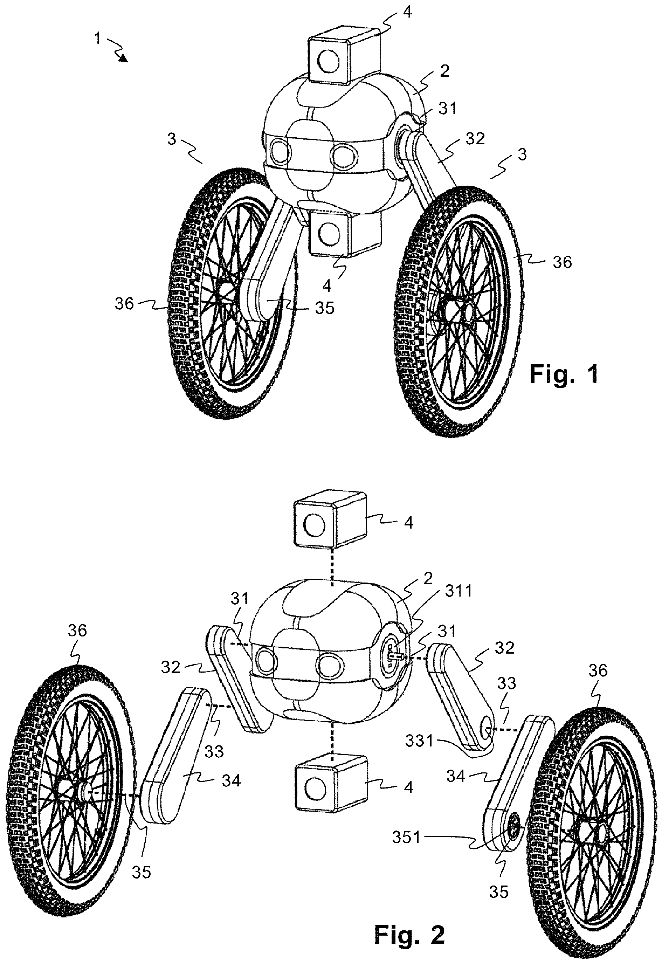

The robotic vehicle 1 shown in **Figures 1** and **2** comprises: a body 2 with one or more sensors 4 and/or other elements rigidly attached to and moving with it. The body 2 is supported by two legs 3, which can be called a right leg and a left leg.
- Each leg is attached, at a proximal end of an upper link 32 to the body 2 by a hip joint 31 that allows the upper link 32 to rotate relative to the body 2 and is driven by a hip drive 311.
- For each leg, a proximal end of a lower link 34 is attached to a distal end of the upper link 32 by a knee joint 33 that allows the lower link 34 to rotate relative to the upper link 32 and is driven by a knee drive 331.
- For each leg, a wheel 36 is attached to a distal end of the lower link 34 by a wheel joint 35 that allows the wheel 36 to rotate relative to the lower link 34 and is driven by a wheel drive 351.

In more detail, differentiating between the left and right leg:
- The right leg has a right upper link 32 and a right lower link 34. The right leg has 2 degrees of freedom provided by two rotary actuators: a right hip drive 311 and a right knee drive 331. The right hip joint 31 is located between the body 2 and the right upper link 32. The right knee joint 33 is located between the right upper link 32 and the right lower link 34.
- The right wheel 36 is attached to the right lower link 34 at a wheel joint 35. The right wheel 36 is driven by a rotary actuator or right wheel drive 351 in the wheel joint 35.
- The left leg has a left upper link 32 and a left lower link 34. The left leg has 2 degrees of freedom provided by two rotary actuators: a left hip drive 311 and a left knee drive 331. The left hip joint 31 is located between the body 2 and the left upper link 32. The left knee joint 33 is located between the left upper link 32 and the left lower link 34.
- The left wheel 36 is attached to the left lower link 34 at a wheel joint 35. The left wheel 36 is driven by a rotary actuator or left wheel drive 351 in the wheel joint 35.

The right and left hip joints 31 and knee joints 33 can comprise a set of slip ring electrical contacts providing power and communication to the corresponding links. This allows the respective joints to rotate an arbitrary number of rotations.

In order to allow for an arbitrary number of rotations, the corresponding elements of the robotic vehicle 1 further can be shaped and arranged relative to one accordingly. For example, the links and joints are free from parallelogram or trapezoidal (parallel linkages), they are arranged to rotate sweep through nonintersecting volumes of space when rotating relative to one another, and they can be driven by direct drives arranged in the respective joints themselves.

The robotic vehicle 1 has one or more environmental perception sensors 4, or other functional elements rigidly attached to the body. The robotic vehicle 1 can position and orient the sensors or other functional elements with six degrees of freedom, without requiring additional moving parts, but only by using the degrees of freedom of the legs and wheels. The six dimensions can be called roll, pitch, yaw and latitude, longitude and height. They correspond to a pose, that is, position and orientation of the body 2. The robotic vehicle 1 moves as a nonholonomic system, therefore certain points in the six-dimensional space of possible pose configurations need to be reached by a specific path through the dimensions defined by the movement of the leg drives, that is, of the two hip drives 311, the two knee drives 331, and the two wheel drives 351.

In embodiments, the body 2 and thus the cooperating units (4, 5, 6, 7) can be oriented in any arbitrary pitch angle (0-360 degrees) and yaw angle (0-360 degrees), and the sensor can be rotated an arbitrary number of times. Roll rotation is also possible.

The robotic vehicle 1 can use the legs 3 and wheels 36 to balance on its wheels 36 and move over the ground. It can also use its legs 3 and wheels 36 to overcome outdoor uneven terrain, like ramps and small steps. It can also use its legs 3 and wheels 36 to bring the body 2 in contact with the ground (sit down) and lift the body 2 off the ground (stand up). This ability to sit down and stand up can be applied to autonomously in dock the robotic vehicle 1 to a charger, and/or to releasably connect the body 2 to a detachable element and thereby pick it up or place and release it.

The robotic vehicle 1 has hybrid autonomy, and can, for example, patrol outdoors routes autonomously to perform security surveillance tasks. A human operator can take control remotely, and command the robot. Machine learning or artificial intelligence methods can be applied to performing security surveillance functions or tasks. Results of such functions can be reported to a server.

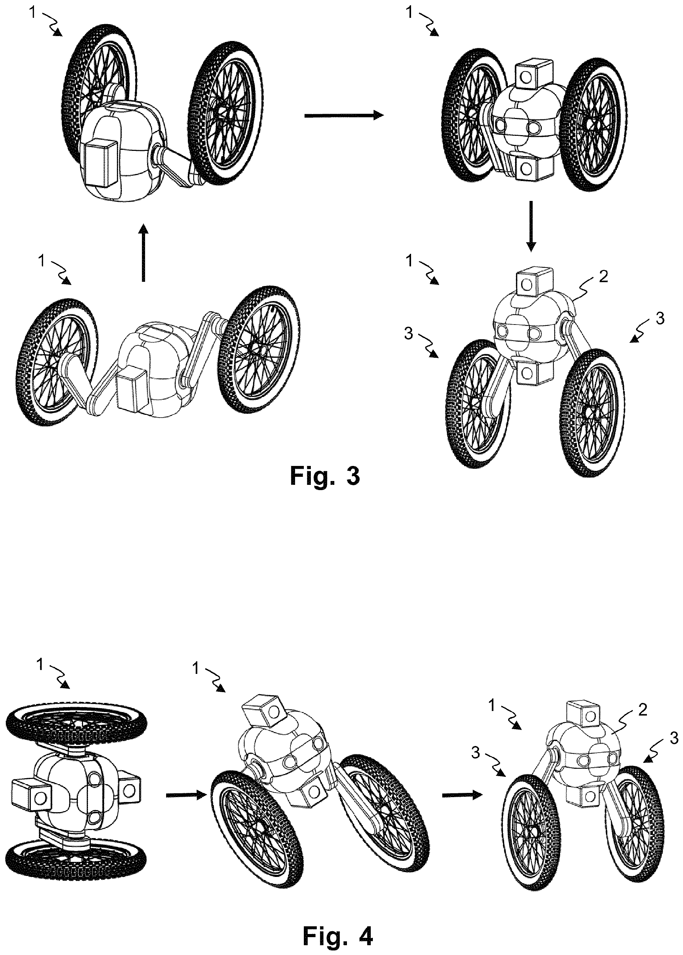

**Figures 3** shows a sequence or motion for uprighting the vehicle when facing forward or backward configurations. The vehicle can first rotate the hips 31 to place both upper links 32 roughly parallel to each other. Then, it can rotate its knees 33, so that the body 2 is placed roughly in between the wheels 36. The hips 31 can also be rotated to provide the body 2 with the desired pitch orientation. Then the knees 33 can be lifted and the balancing motion can start.

**Figures 4** shows sequences or motion for uprighting the vehicle when in sidewise configurations. The vehicle can first extend the top leg 3, to generate a moment due to the weight of the top leg 3, and top wheel 36. After this moment rotates the body 2 and both wheels are in contact with the ground, the bottom leg 2 can be extended and the balancing motion can start.

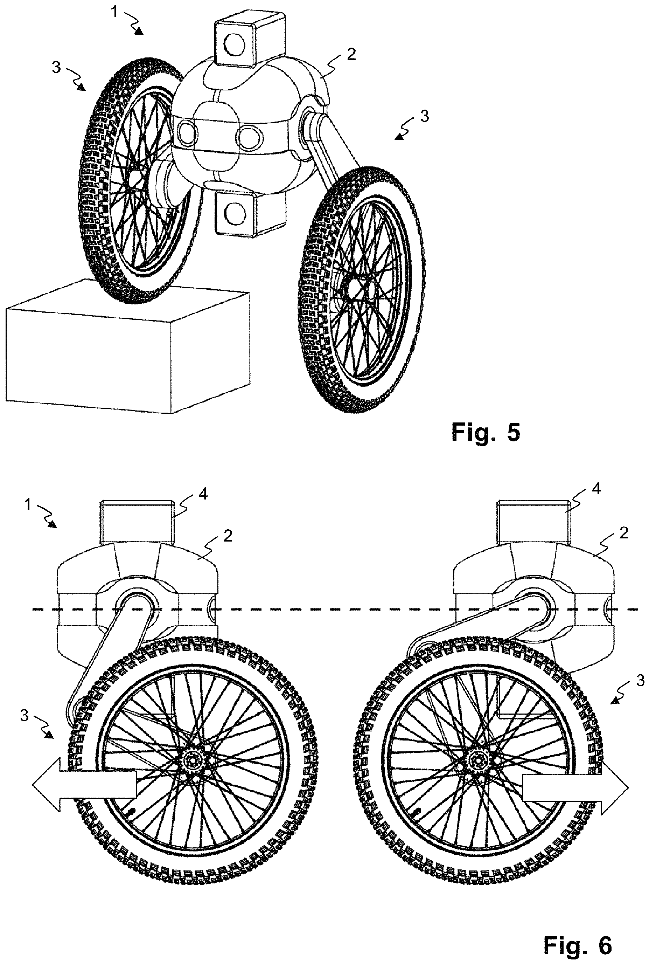

**Figures 5-6** show adaptability of the vehicle: the robotic vehicle 1 can balance on the right and left wheels 36. It can maintain balance by providing positive torque on both wheel joints 35 if the body 2 is tilting forward and negative torque if the body 2 is tilting backwards. While this happens, the hip joints 31 and knee joints 33 and can be kept at specified angles. On uneven ground, the legs can be retracted or extended individually in order to keep the body 2 in a horizontal position with regard to roll angle **(****Figure 5****).**

The robotic vehicle 1 can move forward by balancing at a small positive pitch angle, leading to a forward velocity to maintain balance. The robotic vehicle 1 can move backwards by balancing at a small negative pitch angle, leading to a backwards velocity to maintain balance. Corresponding control algorithms are commonly known. In each case the orientation of the body 2 can be controlled to compensate for the pitch angle **(****Figure 6****,** with the direction of travel indicated by block arrows).

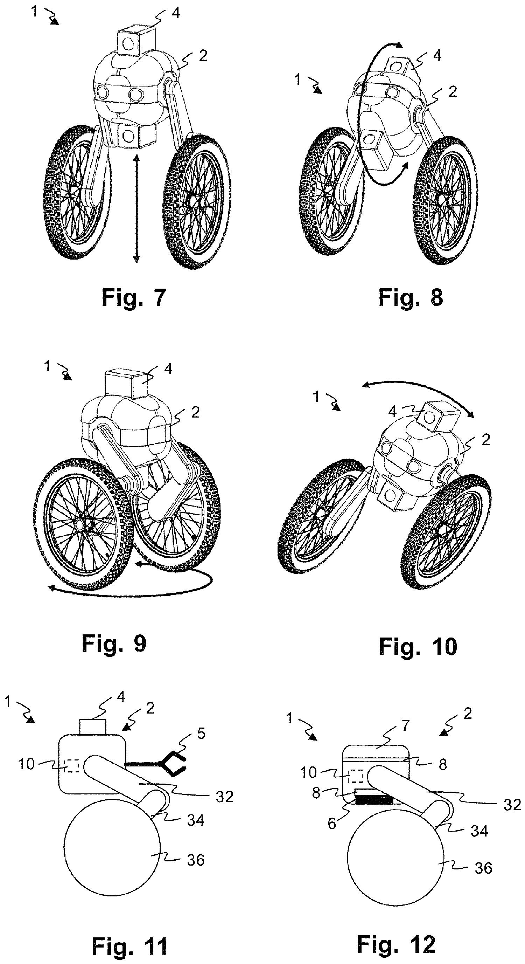

**Figures 7-10** show movability of the vehicle's body and an attached sensor.
- The robotic vehicle 1 can **(****Figure 9****)** rotate the body 2 with a positive **yaw** angle by increasing the angle or the angular velocity of the right wheel joint 35 and decreasing the angle or the angular velocity of the left wheel joint 35. The device can rotate the body 2 with a negative yaw angle by decreasing the angle or the angular velocity of the right wheel joint 35 and increasing the angle or the angular velocity of the left wheel joint 35.
- The robotic vehicle 1 can **(****Figure 7****)** increase the **height** of the body 2 by increasing the angle of the right and the left knee joint 33s. The device can decrease the height of the body 2 by decreasing the angle of the right and the left knee joint 33s..
- The robotic vehicle 1 can **(****Figure 10****)** rotate the body 2 with a positive **roll** angle by decreasing the angle of the right knee joint 33 and increasing the angle of the left knee joint 33. The device can rotate the body 2 with a negative roll angle by increasing the angle of the right knee joint 33 and decreasing the angle of the left knee joint 33.
- The robotic vehicle 1 can **(****Figure 8****)** rotate the body 2 with a positive **pitch** angle by decreasing the angle of the right and left hip joints 31. The device can rotate the body 2 with a negative pitch angle by increasing the angle of the right and the left hip joints 31.

In each of the cases described above, it is understood that drives not involved directly in the movement described are controlled to maintain the stable upright position of the robotic vehicle 1 and the orientation of the body 2.

The robotic vehicle 1 can combine movements along several dimensions to achieve specific behaviour:
- It can accelerate forward while pitching the body 2 to make the body 2 remain horizontal with respect to the ground **(****Figure 6****).**
- It can roll the body 2 and change the body 2 height when going over a bump on one wheel only, to make the body 2 remain at constant height **(****Figure 5****).**
- It can use combined actuation from hip joints 31, knee joints 33 and wheels 36, to go over uneven terrain, like steps, up or down, and ramps and bumps.
- It can use combined actuation from hip joints 31, knee joints 33 and wheels 36, to stand up, that is, going from a configuration where the body 2 is in contact with the ground or hanging between the wheels, and no actuator applies any torque, to an extended configuration of the legs 3 in which the robotic vehicle 1 is upright and balanced. The body 2 can also use combined actuation from hip joints 31, knee joints 33 and wheels 36 to sit down, that is, going from an upright, balancing configuration to one in which the body 2 being on the ground or hanging between the wheels, and no actuator applying any torque.
- The device can dock in a docking station to charge, by performing a sit-down manoeuvre.

The device can flip the environmental perception sensors by rotating the head 180 degrees around the pitch angle. This gives the sensors 4 an extended view of the environment.

**Figure 11** shows a vehicle with an actuator. The advantages of being able to move and position an actuator 5 with six degrees of freedom without the need for additional joints and drives correspond to the advantages described in the context of a sensor.

**Figure 12** shows a vehicle with detachable elements. The detachable elements shown are a battery 6 and a payload 7. In other embodiments, they can be sensors 4 or actuators 5, or an arbitrary combination of such detachable elements. A detachable element is attached to the body 2 by a connecting element 8. In embodiments, fewer or more than the two connecting elements 8 shown are present. The connecting element 8 is rigidly attached to the body 2, and can form a releasable mechanical connection to a correspondingly formed section of a detachable element. The mechanical connection can be formed by interlocking elements such as hooks or bolts, magnets or the like. They can be actuated or operated for locking and releasing the connection by movement of the body 2 relative to the detachable element, or by dedicated actuators.

In embodiments, the cooperating unit 6 is a battery payload and the connecting mechanism 8 is an automated locking pin that ensures mechanical and electrical connection. In embodiments, the cooperating unit 4 is a 1D sensor such as a camera, and the connecting mechanism 8 is an automated locking pin that ensures mechanical and electrical connection.

While the invention has been described in present embodiments, it is distinctly understood that the invention is not limited thereto, but may be otherwise variously embodied and practised within the scope of the claims.

## Claims

1. A robotic vehicle (1), comprising a body (2) and two legs (3) for locomotion, and a control unit (10) for controlling movement of the two legs (3),
the two legs (3) being attached to opposing sides of the body (2),
wherein for each of the two legs it is the case that
• the leg (3) comprises a respective hip joint (31), an upper link (32), a knee joint (33), a lower link (34), a wheel joint (35), and a wheel (36),
• the upper link (32) being attached to the body (2) and being rotatable relative to the body (2) by the hip joint (31), with a relative angular position of the hip joint (31) being set by a hip drive (311),
• the lower link (34) being attached to the upper link (32) and rotatable relative to the upper link (32) by the knee joint (33),
• with a relative angular position of the knee joint (33) being set by a knee drive (331),
• the wheel (36) being attached to the lower link (34) and rotatable relative to the lower link (34) by the wheel joint (35),
• with a relative angular position of the wheel joint (35) being set by a wheel drive (351),
**characterised in that**
for at least one of the two legs (3), in particular for both, the relative angular position of the respective hip joint (31) has a range of at least 180°.

2. The robotic vehicle of claim 1, wherein for at least one of the two legs, in particular for both, the relative angular position of the respective hip joint (31) has a range of at least 350°.

3. The robotic vehicle of claim 1, wherein for at least one of the two legs, in particular for both, the relative angular position of the respective hip joint (31) has a range of at least 1080°, in particular wherein the relative angular position is not limited.

4. The robotic vehicle of one of the preceding claims, wherein for at least one of the two legs (3), in particular for both, the relative angular position of the respective knee joint (33) has a range of at least 180°.

5. The robotic vehicle of claim 4, wherein for at least one of the two legs, in particular for both, the relative angular position of the respective knee joint (33) has a range of at least 350°, in particular least 1080°, in particular wherein the relative angular position is not limited.

6. The robotic vehicle of one of the preceding claims, comprising a sensor (4) for noncontact sensing, in particular one or more of a camera, a distance sensor, microphones, ground penetrating radars.

7. The robotic vehicle of one of the preceding claims, comprising a sensor (4) for contact sensing, in particular one or more of an ohm-metre, corrosion sensor, Ultrasonic Transducer, Electro Magnetic Acoustic Transducer, Dry Film Thickness gauge or the like.

8. The robotic vehicle of one of the preceding claims, comprising an actuator (5), in particular one or more of a gripper, or a tool, such as an electromagnet, a drill, a brush, a grinder machine, a sanding machine or the like.

9. The robotic vehicle of one of the preceding claims, comprising a cooperating unit (4, 5, 6, 7) that is configured to be carried by the vehicle, and a connecting element (8) arranged to releasably connect the body (2) to the cooperating unit (4, 5, 6, 7) by a mating operation, wherein the mating operation comprises moving the body (2) relative to the cooperating unit (4, 5, 6, 7).

10. The robotic vehicle of claim 9, wherein the cooperating unit is one of an actuator (5) or a sensor (4).

11. The robotic vehicle of claim 9 or claim 10, wherein the cooperating unit is a battery (6).

12. The robotic vehicle of one of claims 9 to 11, wherein the cooperating unit is a payload or a unit configured to receive and carry a payload (7).

13. The robotic vehicle of one of claims 9 to 12, the control unit (10) being programmed to perform a connection operation to connect the body (2) to the cooperating unit, wherein the connection operation comprises operating the legs (3) to move the body (2) to be located adjacent to, in particular above, the cooperating unit (4, 5, 6, 7), and to perform a mating movement of the body (2) towards and against the cooperating unit (4, 5, 6, 7).
